# EUROPEAN PATENT SPECIFICATION

(11) **EP 4 275 481 B1**
(45) Date of publication and mention of the grant of the patent: **21.08.2024**
(21) Application number: 23161364.7
(22) Date of filing: 13.03.2023
(51) Int. Cl.: A01G 3/053

(54) **HEDGE TRIMMER**
HECKENSCHERE
TAILLE-HAIE

(30) Priority: 13.05.2022 CN 202210532601; 13.05.2022 CN 202221158133 U
(43) Date of publication of application: 15.11.2023
(73) Proprietor: Nanjing Chervon Industry Co., Ltd., Nanjing, Jiangsu 211106 (CN)
(72) Inventor: XU, Yifan, Nanjing, Jiangsu 211106, (CN); ZHAO, Xiaozhe, Nanjing, Jiangsu 211106, (CN); YAMAOKA, Toshinari, Nanjing, Jiangsu 211106, (CN)
(74) Representative: Sun, Yiming

(56) References cited:
- EP-A1- 3 318 117
- EP-A1- 3 821 697
- US-A- 3 768 163
- US-A1- 2018 206 410

## Description

### TECHNICAL FIELD

The present application relates to a power tool and, in particular, to a hedge trimmer.

### BACKGROUND

A hedge trimmer is a power tool that drives two blades in a blade assembly to reciprocate. Typically, the blade assembly of the hedge trimmer is made of a metal material such as an aluminum alloy. The weight, hardness, strength, and other properties of the blade assembly affect machine performance and user experience. Document EP3318117A1 discloses the features of the preamble of claim 1.

### SUMMARY

The present application provides a hedge trimmer to reduce the weight of a blade assembly and improve the bending resistance of the blade assembly. To achieve the preceding object, the present application adopts the technical solutions below. According to the invention, a hedge trimmer comprising:
a housing formed with an accommodation space; a blade assembly including a first blade and a second blade, where the first blade and the second blade reciprocate along a direction of a first straight line, and the blade assembly further includes a blade support for supporting the first blade and the second blade and extending along the direction of the first straight line; a transmission mechanism for driving the blade assembly to move; and a motor coupled to the housing and used for driving the transmission mechanism; where the blade support has a density of greater than or equal to 1 g/cm³ and less than or equal to 2.2 g/cm³.

In an example, the blade support has a hardness of greater than or equal to 7 HW and less than or equal to 15 HW.

In an example, the blade support is made of at least one composite material.

In an example, the blade support is made of a mixture of a carbon fiber material and a glass fiber material. In an example, the mass ratio of the carbon fiber material to the glass fiber material in the blade support is greater than or equal to 0.5 and less than or equal to 2.

In an example, the mass ratio of the carbon fiber material to the glass fiber material in the blade support is 1.

In an example, the blade support of the hedge trimmer has a thickness of greater than or equal to 5 mm and less than or equal to 10 mm.

In an example, the ratio of the length to the thickness of the blade support is greater than or equal to 75 and less than or equal to 170.

In an example, the blade assembly includes a spacer disposed between the second blade and the blade support, and the first blade is disposed on the lower side of the second blade.

In an example, the blade support includes a through hole, where a hole distance of the through hole in a radial direction of the blade assembly is defined as a first diameter; the first blade includes a first opening and the second blade includes a second opening, where an opening distance of the first opening in the radial direction of the blade assembly is a first length, an opening distance of the second opening in the radial direction of the blade assembly is a second length, and the first length and the second length are greater than the first diameter; and the blade assembly further includes a fastener passing through the first opening, the second opening, and the through hole.

The present application has the following beneficial effects: the material and hole position of the blade support are optimized so that the blade assembly has a smaller weight and better bending resistance and is not easily deformed.

### BRIEF DESCRIPTION OF DRAWINGS

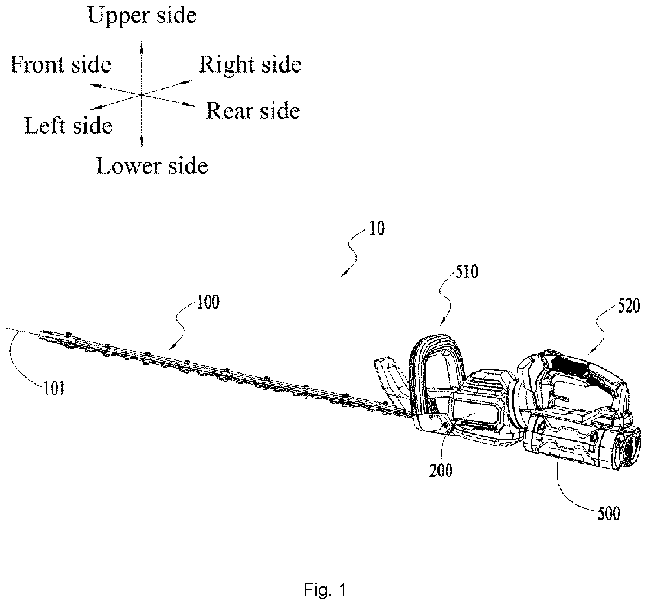

FIG. 1 is a perspective view of a hedge trimmer;
FIG. 2 is a perspective view of the hedge trimmer of FIG. 1 with part of a housing removed;
FIG. 3 is a partial sectional view of a blade assembly of FIG. 1 mounted to the hedge trimmer;
FIG. 4 is an exploded view of a blade assembly of FIG. 1;
FIG. 5 is a perspective view of a blade support of FIG. 4;
FIG. 6 is a partial sectional view of a blade assembly of FIG. 1;
FIG. 7 is a side view of a hedge trimmer;
FIG. 8 is a side view of a hedge trimmer;
FIG. 9 is a perspective view of a hedge trimmer with a second handle rotated by 90°;
FIG. 10 is a side view of the hedge trimmer of FIG. 9 placed on a plane;
FIG. 11 is a perspective view of a power tool;
FIG. 12 is a perspective view of a first housing and an angle indicator of the power tool of FIG. 11;
FIG. 13 is a perspective view of a second housing of the power tool of FIG. 11;
FIG. 14 is a perspective view of the angle indicator of FIG. 12;
FIG. 15 is a partial perspective view of the first housing of FIG. 12; and
FIG. 16 is a perspective view illustrating that a first grip of the power tool is rotated by an angle relative to the position shown in FIG. 11.

### DETAILED DESCRIPTION

To make solved technical problems, adopted technical solutions, and achieved technical effects of the present application more apparent, the technical solutions in the examples of the present application are further described in detail below in conjunction with the drawings. The examples described below are part, not all, of examples of the present application.

In the description of the present application, it is to be noted that orientations or position relations indicated by terms such as "center", "upper", "lower", "left", "right", "front", and "rear" are based on the drawings. These orientations or position relations are intended only to facilitate and simplify the description of the present application and not to indicate or imply that a device or element referred to must have such particular orientations or must be configured or operated in such particular orientations.

Thus, these orientations or position relations are not to be construed as limiting the present application. Moreover, terms such as "first" and "second" are used only for distinguishing between different structures or components and are not to be construed as indicating or implying relative importance.

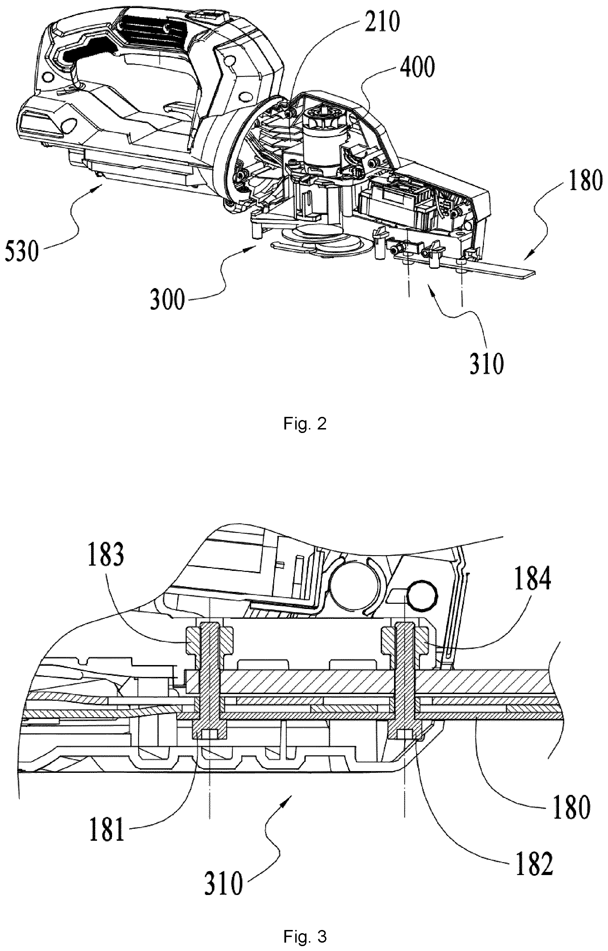

The present application discloses a hedge trimmer 10. The hedge trimmer 10 includes a blade assembly 100, a first handle 510, and a second handle 520. A battery pack 500 is below the second handle 520 and mounted to a battery pack coupling portion 530. The blade assembly 100 includes two blades that can move relatively to implement a trimming function. The hedge trimmer 10 further includes a housing 200 formed with an accommodation space 210, and a motor 400 drives a transmission mechanism 300 to move to drive a first blade 110 and a second blade 120 to reciprocate along a first straight line 101. As shown in FIG. 2, in this example, the motor 400 and the transmission mechanism 300 are both disposed in the accommodation space 210 of the housing 200.

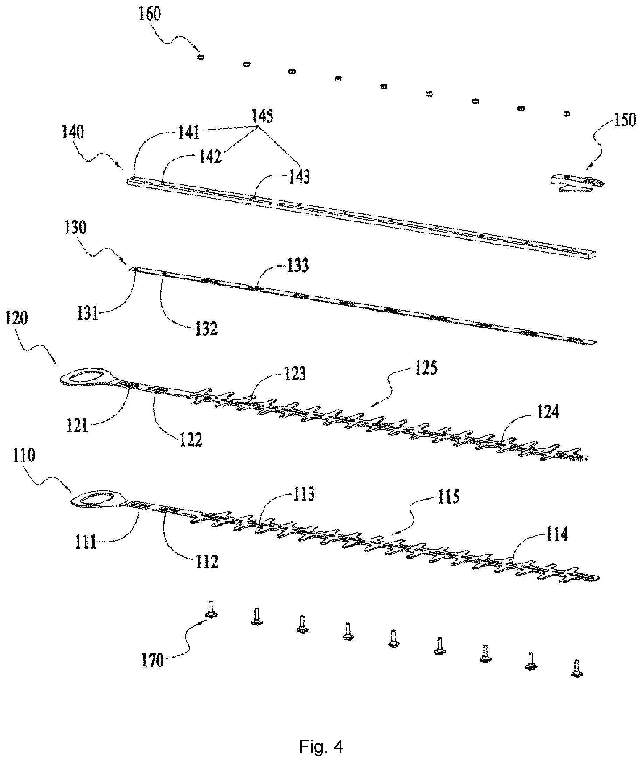

As shown in FIG. 4, after the blade assembly 100 is disassembled, the first blade 110, the second blade 120, a spacer 130, and a blade support 140 are arranged from bottom to top. In this example, the blade assembly 100 includes the first blade 110 and the second blade 120, and eccentric holes at the same ends of the first blade 110 and the second blade 120 are mounted in the transmission mechanism 300 shown in FIG. 2 so that the first blade 110 and the second blade 120 both reciprocate. When the first blade 110 and the second blade 120 reciprocate, a first trimming portion 115 and a second trimming portion 125 move relatively, thereby achieving a trimming action.

In this example, the spacer 130 is made of a rubber material and disposed between the second blade 120 and the blade support 140 to reduce the friction between the second blade 120 and the blade support 140. In an example, the blade support 140 and the spacer 130 may be one piece, that is, the blade support is made of a material with good wear resistance. In an example, the blade support 140 is provided with pulleys or balls, no spacer 130 is disposed between the second blade 120 and the blade support 140, and the second blade 120 moves on a contact surface of the blade support 140 in a rolling manner.

In this example, the first blade 110 and the second blade 120 are disposed on the same side of the blade support 140, the blade support 140 extends along the direction of the first straight line 101, and the blade assembly 100 moves along the direction of the first straight line 101. When the first blade 110 and the second blade 120 move relatively, the first blade 110 and the second blade 120 always rely on the blade support 140, and the blade support 140 not only prevents the first blade 110 and the second blade 120 from excessively bent but also ensures that the first blade 110 and the second blade 120 have certain bending deformation. Therefore, the hardness, strength, and bending resistance of the blade support 140 affect the cutting ability of the blade assembly 100.

As shown in FIGS. 2 and 3, a fixing plate 180 is mounted on the lower side of the first blade 110, and a first screw 181 passes through a positioning portion 310 of the transmission mechanism 300 in the housing 200, a first positioning hole 111 of the first blade 110, a second positioning hole 121 of the second blade 120, a third positioning hole 131 of the spacer 130, and a fourth positioning hole 141 of the blade support 140 in sequence and is finally fastened by a first nut 183.

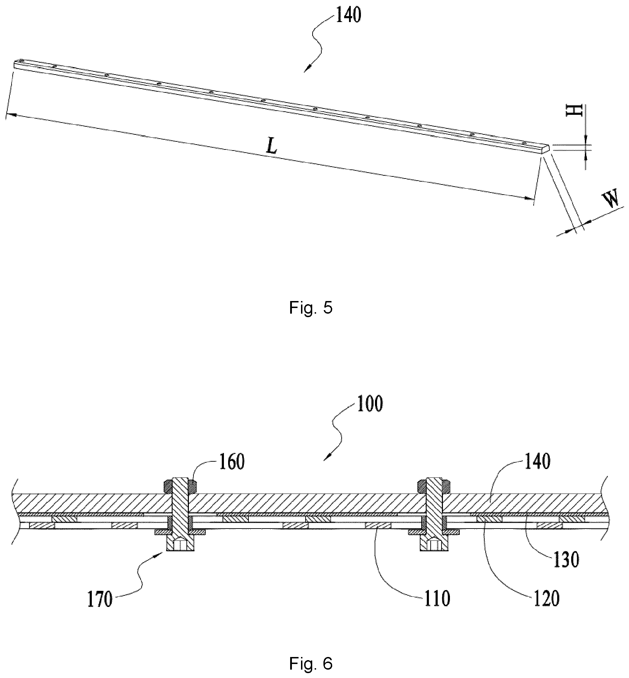

As shown in FIGS. 4 and 6, a second screw 181 passes through the positioning portion 310 of the transmission mechanism 300 in the housing 200, a fifth positioning hole 112 of the first blade 110, a sixth positioning hole 122 of the second blade 120, a seventh positioning hole 132 of the spacer 130, and an eighth positioning hole 142 of the blade support 140 in sequence and is finally fastened by a second nut 184.

In this example, multiple third screws 170 and multiple third bolts 160 connect portions of the first blade 110, the second blade 120, the spacer 130, and the blade support 140 exposed out of the housing 200. A third screw 170 passes through a first blade hole 113 of the first blade 110, a second blade hole 123 of the second blade 120, a third opening 133 of the spacer 130, and a fourth hole 143 of the blade support 140 and then mates with a third bolt 160.

The first blade 110 includes a first opening 114 and the second blade includes a second opening 124. In this example, the first opening 114 and the second opening 124 are disposed to reduce the weight of the blade assembly 100.

A guide 150 is provided at a top end of the blade assembly 100 farthest from the housing 200, where the guide 150 is fixed on the upper side of the blade support 140 through the screw 170 and the bolt 160.

The blade support 140 includes multiple through holes 145. In this example, the through holes 145 include the fourth positioning hole 141, the eighth positioning hole 142, and multiple fourth holes 143 on the outer side of the eighth positioning hole 142. In this example, these through holes 145 are holes having substantially the same diameter and penetrating through the blade support 140. The hole distance of a through hole 145 along the direction of the first straight line 101 of the blade assembly 100 is defined as a first diameter, where the first diameter is smaller than the length of the third opening 133 of the spacer 130 along the direction of the first straight line 101. Such a design has the following advantage: when the blade assembly 100 is bent and deformed due to the cutting operation, the bending of the spacer 130 will not cause the blade support 140 to be bent significantly, thereby reducing noise.

In this example, the density of the blade support 140 is greater than or equal to 1 g/cm³ and less than or equal to 2.2 g/cm³. In an example, the density of the blade support 140 is greater than or equal to 1.3 g/cm³ and less than or equal to 2.2 g/cm³. In an example, the density of the blade support 140 is greater than or equal to 1.5 g/cm³ and less than or equal to 2 g/cm³. In some examples, the density of the blade support 140 may be 1.6 g/cm³, 1.65 g/cm³, 1.7 g/cm³, 1.75 g/cm³, or 1.8 g/cm³.

In some examples, the hardness of the blade support 140 is greater than or equal to 7 HW and less than or equal to 15 HW In some examples, the hardness of the blade support 140 may be 9 HW, 10 HW, or 11 HW, where the unit of hardness is Wechsler hardness.

As shown in FIG. 5, in this example, the thickness H of the blade support 140 is greater than or equal to 5 mm and less than or equal to 10 mm. In some examples, the thickness of the blade support 140 may be 6 mm, 6.5 mm, 7 mm, 7.5 mm, or 8 mm. In this example, the length L of the blade support 140 is greater than or equal to 750 mm and less than or equal to 850 mm. In some examples, the length L of the blade support 140 may be 790 mm, 800 mm, 810 mm, or 820 mm. In this example, the width W of the blade support 140 is greater than or equal to 12 mm and less than or equal to 25 mm. In some examples, the length L of the blade support 140 may be 15 mm, 17 mm, 19 mm, or 21 mm. In an example, the ratio of the length to the thickness of the blade support 140 is greater than or equal to 75 and less than or equal to 170.

In some examples, the blade support 140 is made of at least one composite material.

In an example, the blade support 140 is made of a mixture of a carbon fiber material and a glass fiber material. In an example, the mass ratio of the carbon fiber material to the glass fiber material in the blade support 140 is greater than or equal to 0.5 and less than or equal to 2. In an example, the mass ratio of the carbon fiber material to the glass fiber material in the blade support 140 is 1, that is, the carbon fiber material and the glass fiber material are formulated at a mass ratio of 1:1 into the blade support.

An existing blade support 140 is typically made of a metal material. The blade support 140 made of the composite material in this example reduces the weight of the blade assembly 100, and the bending resistance of the blade support 140 is increased, avoiding easy deformation. The mass ratio of different components in the composite material is adjusted so that blade supports 140 with different densities and hardness can be obtained, thereby achieving different bending resistance.

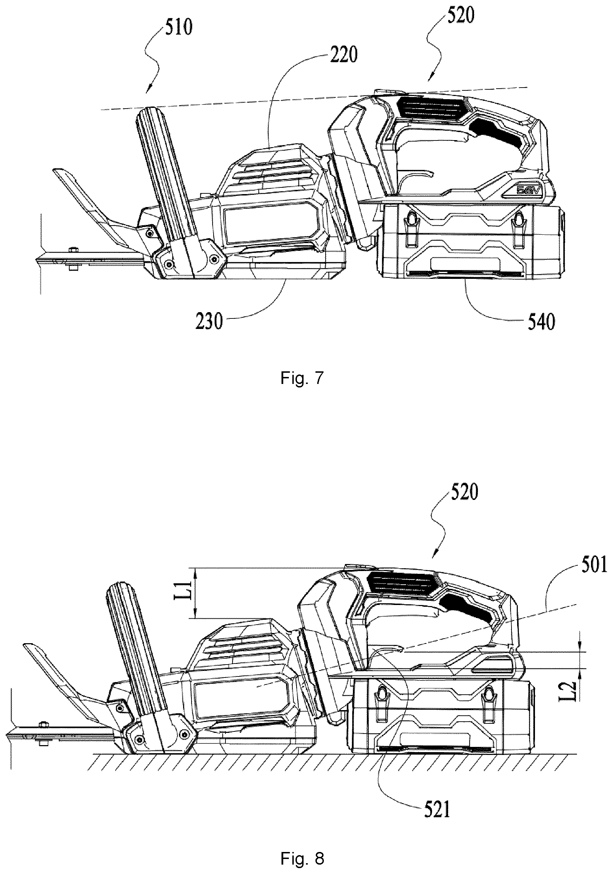

As shown in FIG. 7, in this example, a line between the first handle 510 and the second handle 520 is higher than the top of the housing 200. That is to say, the line between the first handle 510 and the second handle 520 is higher than the top of the motor 400. As shown in FIG. 8, the distance between the second handle 520 and the top of the housing 200 above the motor 400 in an up and down direction is a first distance L1, where the first distance L1 is greater than or equal to 40 mm.

In this example, the handle of the hedge trimmer 10 is rotatable, that is to say, the second handle 520 is rotatable about a rotation axis 501 relative to the structure in front of the second handle 520. A trigger 521 is a switch for controlling whether the second handle 520 is rotatable. When an operator presses the trigger 521 upward to a certain position, the second handle 520 is rotatable. When the operator releases the trigger 521, the second handle 520 cannot rotate. The distance between the bottom of the trigger 521 of the second handle 520 and the housing 200 below the trigger 521 is a second distance L2, where the second distance L2 is greater than or equal to 15 mm. A finger can more easily extend into the space below the trigger 521 with better operation experience and is not easily jammed.

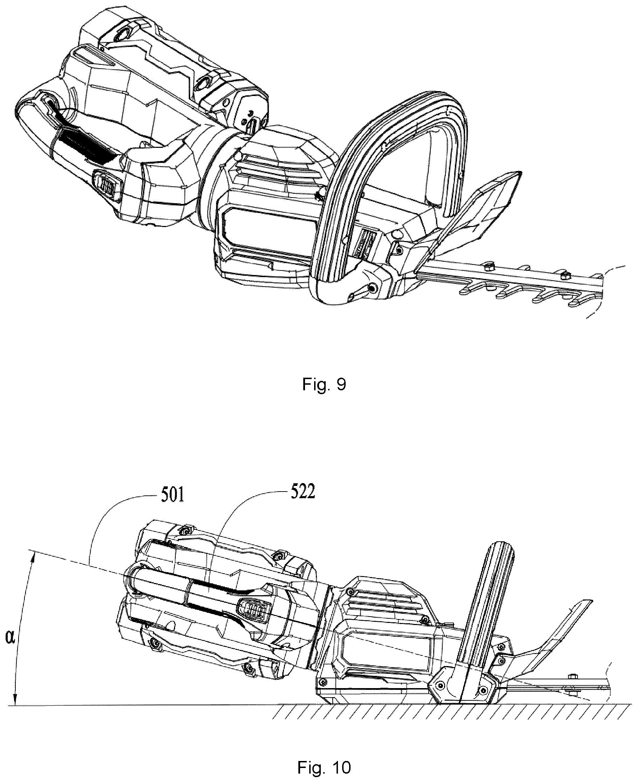

As shown in FIGS. 9 and 10, the second handle 520 of the hedge trimmer 10 is rotated clockwise by 90°, and the extension direction of a handle portion 522 of the second handle 520 substantially coincides with the rotation axis 501 of the second handle 520. If the hedge trimmer 10 is placed on a horizontal plane as shown in FIG. 10, the included angle between the rotation axis 501 and the horizontal plane is greater than or equal to 10° and less than or equal to 20°.

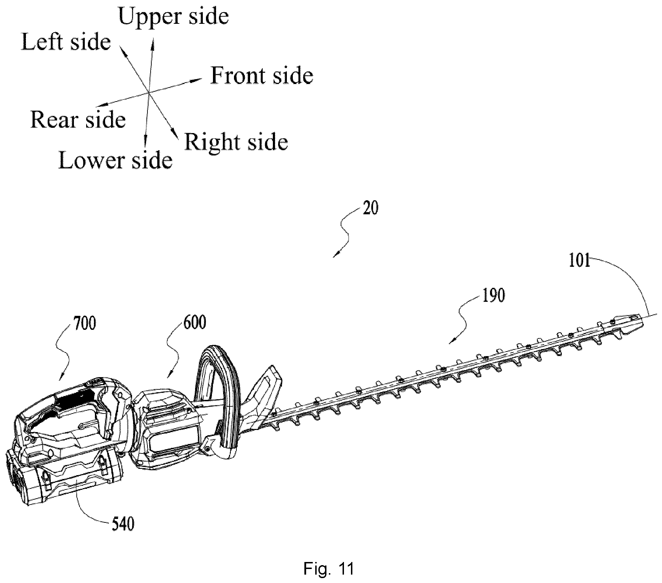

FIGS. 11 to 16 show another example of the hedge trimmer.

As shown in FIG. 11, a power tool 20 disclosed in this example includes an output assembly 190, a first housing 600, and a second housing 700. The output assembly 190 is a blade assembly, and the blade assembly shown in FIG. 11 includes two blades reciprocating along a first direction 101 in which the blade assembly extends so that the cutting surfaces of the two blades form a trimming motion. In some examples, the output assembly 190 may include a trimming head of a string trimmer, a chain of a chain saw, a circular saw blade of a circular saw, strip blades of the hedge trimmer, and the like. The first housing 600 accommodates a motor that can drive the output assembly 190 to operate, the first housing 600 is connected to the output assembly 190, and the second housing 700 is connected to the first housing 600.

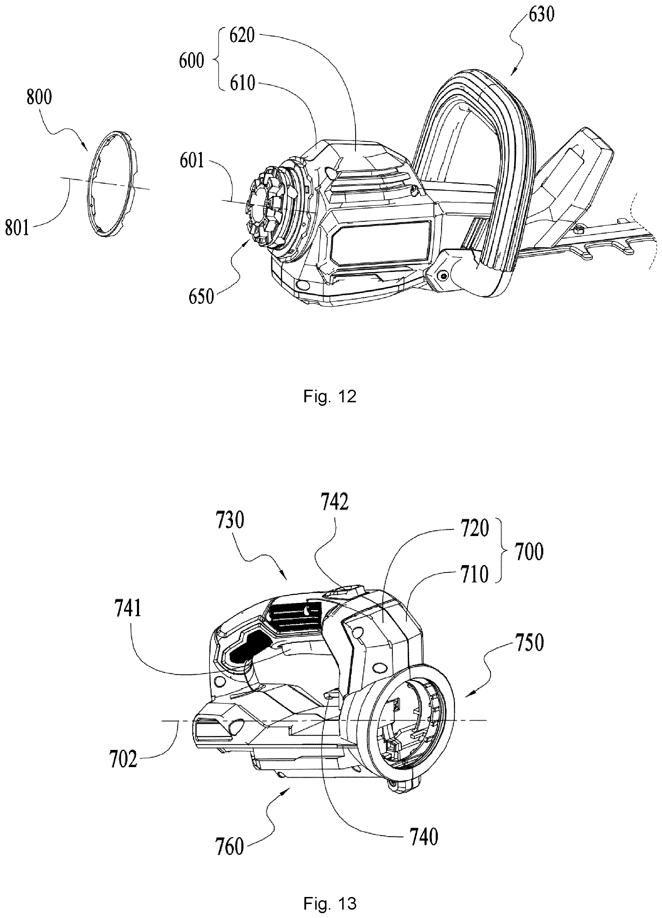

The hedge trimmer is described as an example. As shown in FIGS. 12 and 13, the first housing 600 includes a first connecting portion 650 and the second housing 700 includes a second connecting portion 750, where the first connecting portion 650 and the second connecting portion 750 are rotatably connected. That is to say, the first housing 600 and the second housing 700 are connected through the first connecting portion 650 and the second connecting portion 750, and the first connecting portion 650 and the second connecting portion 750 can be rotatably connected.

In some examples, the second housing 700 has a rotatable state and a locked state. When the second housing 700 is in the rotatable state, the second housing 700 is rotatable relative to the first housing 600. When the second housing 700 is in the locked state, the second housing 700 is stationary relative to the first housing 600. In an example, the first housing 600 is disposed between the output assembly 190 and the second housing 600. In an example, an angle indicator 800 is disposed between the first housing 600 and a first grip 730.

In this example, the second housing 700 is formed with the first grip 730, the first housing 600 is formed with a second grip 630, and the second grip 630 is configured to be around the first housing 600. When the first grip 730 is rotated by a certain angle relative to the first housing 600, the position of the second grip 630 held by an operator may change. A second operation member 741 for controlling the motor to start and stop is disposed on the lower side of the first grip 730 and a third operation member 742 for speed regulation of the motor is disposed on the upper side of the first grip 730. In this example, when the operator presses the third operation member 742, the rotational speed of the motor can be rapidly increased to a maximum value so that the cutting speed of the output assembly 190 is rapidly adjusted to a maximum speed.

In some examples, the power tool 20 is provided with a first operation member 740 which is operated to control the relative rotation between the second housing 700 and the first housing 600. In this example, the first operation member 740 (see FIG. 13) on the second housing 700 is pressed upward with a finger to release a locking structure between the first connecting portion 650 and the second connecting portion 750, and then a steering force is applied to the first grip 730 to make the first grip 730 to rotate relative to the first housing 600.

As shown in FIG. 12, the first connecting portion 650 of the first housing 600 is centered on a first straight line 601 and extends outward along a radial direction of the first straight line 601. As shown in FIG. 13, the second connecting portion 750 of the second housing 700 is centered on a second straight line 702 and extends outward along a radial direction of the second straight line 702. When the first connecting portion 650 and the second connecting portion 750 are connected, the first straight line 601 substantially coincides with the second straight line 702. When the second housing 700 is rotated relative to the first housing 600, the first straight line 601 keeps coinciding with the second straight line 702.

In this example, the first housing 600 includes a first left housing 610 and a first right housing 620, the second housing 700 includes a second left housing 710 and a second right housing 720, the first left housing 610 is disposed on the left side of the first right housing 620, and the second left housing 710 is disposed on the left side of the second right housing 720. The first left housing 610 and the first right housing 620 are spliced to form the first connecting portion 650 and the second left housing 710 and the second right housing 720 are spliced to form the second connecting portion 750.

The power tool 20 further includes the angle indicator 800, the angle indicator 800 may be used for indicating an angle by which the first grip 730 is rotated relative to the first housing 600, and the angle indicator 800 is sleeved to the first housing 600.

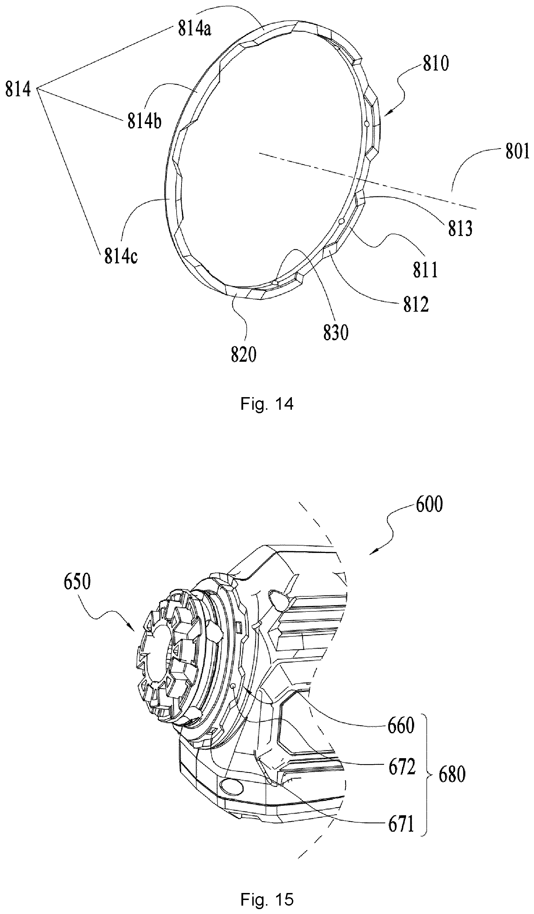

In this example, as shown in FIGS. 14 and 15, the angle indicator 800 is an annular structure formed outward along a radial direction of a third straight line 801. The angle indicator 800 has at least one first fitting portion 810, an outer surface of the first housing 600 includes a second fitting portion 660, one of the first fitting portion 810 and the second fitting portion 660 protrudes, and the other of the first fitting portion 810 and the second fitting portion 660 is recessed.

As shown in FIG. 14, an angle display portion is a portion on an outer surface of the angle indicator 800 and for displaying a rotation angle. Only a first outer surface 814a, a first outer surface 814b, and a first outer surface 814c are marked in FIG. 14, and not all first outer surfaces 814 are shown. In this example, the angle display portion is a first outer surface 814. The first outer surface 814 is the outer surface of the annular structure of the angle indicator 800 at the first fitting portion 810, that is to say, the number of first outer surfaces 814 of the angle indicator 800 is equal to the number of first fitting portions 810. In some examples, the angle display portion is a portion between first outer surfaces 814 of two adjacent first fitting portions 810.

In this example, as shown in FIGS. 14 and 15, the first fitting portion 810 protrudes and each first fitting portion 810 includes a first plane 811, a second plane 812, a third plane 813, and the first outer surface 814 which constitute a protrusion. In this example, the second fitting portion 660 is recessed and composed of several surfaces fitting the first fitting portion 820. It is to be noted that the first fitting portion 810 and the second fitting portion 660 may be in other shapes or have other structures that fit each other, such as a tooth shape, a slot shape, a spiral shape, and an arc shape, and the first fitting portion 810 and the second fitting portion 660 are not limited to the structures disclosed in the present utility model.

As shown in FIG. 14, multiple protrusions 830 are included on the inner periphery of the angle indicator 800 and a protrusion 830 is embedded into a first recess 671 or a second recess 672 shown in FIG. 15. In this example, the protrusion 830 is a spherical protrusion, the first recess 671 is a rectangular groove, and the second recess 672 is a spherical groove. In this example, the first recess 671 and the second recess 672 each have a size to accommodate the protrusion 830, and different sizes of the first recess 671 and the second recess 672 facilitate the positioning and mounting of the angle indicator 800, avoiding inaccurate positioning during assembly. In some examples, the first recess 671 and the second recess 672 may be configured to be the same structure. In some examples, the first housing 600 may further include a third recess different from the first recess 671 and the second recess 672.

As shown in FIG. 15, the first housing 600 has a limiting portion 680, where the limiting portion 680 limits the motion of the angle indicator 800 relative to the first housing 600. That is to say, when the power tool 20 is in operation, the angle indicator 800 remains stationary relative to the first housing 600. In this example, the second fitting portion 660, the first recess 671, and the second recess 672 on the outer periphery of the first housing 600 together constitute the limiting portion 680. The contour shape of the second fitting portion 660 prevents the angle indicator 800 from rotating relative to the first housing 600, and the first recess 671 and the second recess 672 prevent the angle indicator 800 from moving relative to the first housing 600 along the direction of the first straight line 601. Thus, the limiting portion 680 limits the motion of the angle indicator 800 relative to the first housing 600.

In an example, the limiting portion 680 may limit only the rotation of the angle indicator 800 relative to the first housing 600, and the angle indicator 800 is prevented from moving along the direction of the first straight line 601 through the mechanical engagement of the second housing 700 with the first housing 600.

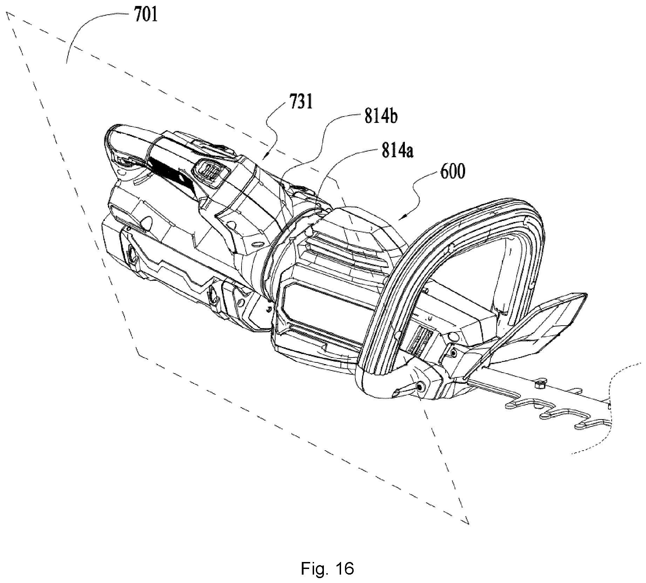

Reference is made to FIGS. 11, 14, and 16. A handle of the first grip 730 extends from front to rear. When the first grip 730 is at the angle shown in FIG. 11 relative to the first housing 600, a front end 731 of the handle of the first grip 730 is aligned with the first outer surface 814a. The first grip 730 has a plane of symmetry 701, and the first grip 730 is substantially symmetrical about the plane of symmetry 701. In this example, the plane of symmetry 701 substantially coincides with an assembly surface of the second left housing 710 and the second right housing 720. When the first grip 730 is at the angle shown in FIG. 16 relative to the first housing 600, the front end of the first grip 730 is aligned with the first outer surface 814b. Therefore, the operator can determine, by observing which angle display portion of the angle indicator 800 is aligned with the front end of the first grip 730, the angle by which the first grip 730 is rotated relative to the first housing 600.

As shown in FIG. 11, when the front end 731 of the handle of the first grip 730 is aligned with the top of the first housing 600, the angle by which the first grip 730 is rotated relative to the first housing 600 is defined as 0°. As shown in FIG. 16, the included angle between the front end 731 of the handle of the first grip 730 and the top of the first housing 600 is an angle represented by the first outer surface 814b. In the example shown in FIG. 16, the angle by which the first grip 730 is rotated relative to the first housing 600 is 45°. The angle display portions of the angle indicator 800 shown in FIG. 14 represent 0°, 45°, 90°, 135°, 180°, 225°, 270°, and 315°, separately. The first outer surface 814a represents 0°, the first outer surface 814b represents that the first grip 730 is rotated relative to the first housing 600 by 45° in a clockwise direction, the first outer surface 814c represents that the first grip 730 is rotated relative to the first housing 600 by 90° in the clockwise direction, and so on.

In an example, the angle display portions of the angle indicator 800 are marked with numbers to display angle information. In an example, the angle display portions of the angle indicator 800 display information about different angles by different colors or shapes. In an example, the angle display portions of the angle indicator 800 have identical properties such as structure, color, and shape, and the operator may reasonably estimate the angle represented by the angle display portion in conjunction with a visual effect.

In an example, the power tool 20 includes a battery pack coupling portion 760 for coupling a battery pack 540. In this example, the battery pack coupling portion 760 is disposed on the second housing 700 and on the lower side of the first grip 730.

In an example, the angle indicator 800 is made of a rigid material such as plastic. Therefore, the thickness of the angle indicator 800 is greater than or equal to 1 mm, where the thickness here refers to a minimum value of the distance between the outer surface and an inner surface of the angle indicator 800 in the radial direction of the third straight line 801. In some examples, the thickness of the angle indicator 800 is 1.2 mm, 1.6 mm, 1.9 mm, or 2.3 mm.

In an example, the angle indicator 800 may be mounted to the second housing 700 and rotates with the second housing 700. In an example, the angle indicator 800 may be split into two portions, where one portion is mounted to the first housing 600 and the other portion is mounted to the second housing 700. The two portions of the angle indicator 800 mate to display an angle of rotation of the handle.

In this example, the angle indicator 800 may be configured with a color different from that of the first housing 600 so that the operator can see the angle information clearly at a glance. Compared with character carving, stickers, and other manners for displaying the angle of rotation of the handle in the existing art, the angle indicator involved in the present utility model is robust and durable, convenient to mount, low in cost, and beautiful in appearance, has an information display function difficult to fail and performs clear display.

The basic principles, main features, and advantages of the present application are shown and described above. It is to be understood by those skilled in the art that the preceding examples do not limit the present application in any form, and the scope of the present application is limited by the appended claims.

## Claims

1. A hedge trimmer (10), comprising:
a housing (200) formed with an accommodation space (210);
a blade assembly (100) comprising a first blade (110) and a second blade (120), wherein the first blade
and the second blade reciprocate along a direction of a first straight line (101); and the blade assembly further comprises a blade support (140) for supporting the first blade and the second blade and extending along the direction of the first straight line;
a transmission mechanism (300) for driving the blade assembly to move; and
a motor (400) coupled to the housing and used for driving the transmission mechanism to move;
**characterised in that**
the blade support (140) has a density of greater than or equal to 1 g/cm³ and less than or equal to 2.2 g/cm³.

2. The hedge trimmer according to claim 1, wherein the blade support has a hardness of greater than or equal to 7 HW and less than or equal to 15 HW

3. The hedge trimmer according to claim 1, wherein the blade support is made of at least one composite material.

4. The hedge trimmer according to claim 3, wherein the blade support is made of a mixture of a carbon fiber material and a glass fiber material.

5. The hedge trimmer according to claim 4, wherein a mass ratio of the carbon fiber material to the glass fiber material in the blade support is greater than or equal to 0.5 and less than or equal to 2.

6. The hedge trimmer according to claim 5, wherein the mass ratio of the carbon fiber material to the glass fiber material in the blade support is 1.

7. The hedge trimmer according to claim 1, wherein the blade support of the hedge trimmer has a thickness of greater than or equal to 5 mm and less than or equal to 10 mm.

8. The hedge trimmer according to claim 1, wherein a ratio of a length to a thickness of the blade support is greater than or equal to 75 and less than or equal to 170.

9. The hedge trimmer according to claim 1, wherein the blade assembly further comprises a spacer (130) disposed between the second blade and the blade support, and the first blade is disposed on a lower side of the second blade.

10. The hedge trimmer according to claim 9, wherein the blade support comprises a through hole (145), wherein a hole distance of the through hole in a radial direction of the blade assembly is defined as a first diameter; the first blade comprises a first opening (114) and the second blade comprises a second opening (124), wherein an opening distance of the first opening in the radial direction of the blade assembly is a first length, an opening distance of the second opening in the radial direction of the blade assembly is a second length, and the first length and the second length are greater than the first diameter; and the blade assembly further comprises a fastener passing through the first opening, the second opening, and the through hole.

## Patentansprüche

1. Heckenschere (10), umfassend:
ein Gehäuse (200), das einen Aufnahmeraum (210) aufweist;
eine Klingenanordnung (100), die eine erste Klinge (110) und eine zweite Klinge (120) umfasst, wobei sich die erste Klinge und die zweite Klinge in der Richtung einer ersten geraden Linie (101) hin und her bewegen;
und die Klingenanordnung ferner einen Klingenträger (140) zum Abstützen der ersten Klinge und der zweiten Klinge umfasst, der sich entlang der Richtung der ersten geraden Linie erstreckt;
einen Übertragungsmechanismus (300) zum Bewegen der Klingenanordnung; und
einen Motor (400), der mit dem Gehäuse gekoppelt ist und zum Antrieb des Übertragungsmechanismus dient;
**dadurch gekennzeichnet, dass** der Klingenträger (140) eine Dichte von größer oder gleich 1 g/cm³ und kleiner oder gleich 2,2 g/cm³ aufweist.

2. Heckenschere nach Anspruch 1, wobei der Klingenträger eine Härte von größer oder gleich 7 HW und kleiner oder gleich 15 HW aufweist.

3. Heckenschere nach Anspruch 1, wobei der Klingenträger aus mindestens einem Verbundwerkstoff hergestellt ist.

4. Heckenschere nach Anspruch 3, wobei der Klingenträger aus einem Gemisch aus einem Karbonfasermaterial und einem Glasfasermaterial hergestellt ist.

5. Heckenschere nach Anspruch 4, wobei das Massenverhältnis des Karbonfasermaterials zum Glasfasermaterial im Klingenträger größer oder gleich 0,5 und kleiner oder gleich 2 ist.

6. Heckenschere nach Anspruch 5, wobei das Massenverhältnis des Karbonfasermaterials zum Glasfasermaterial im Klingenträger 1 beträgt.

7. Heckenschere nach Anspruch 1, wobei der Klingenträger der Heckenschere eine Dicke von größer oder gleich 5 mm und kleiner oder gleich 10 mm aufweist.

8. Heckenschere nach Anspruch 1, wobei das Verhältnis von Länge zu Dicke des Klingenträgers größer oder gleich 75 und kleiner oder gleich 170 ist.

9. Heckenschere nach Anspruch 1, wobei die Klingenanordnung ferner einen Abstandshalter (130) umfasst, der zwischen der zweiten Klinge und dem Klingenträger angeordnet ist, und
wobei die erste Klinge an einer Unterseite der zweiten Klinge angeordnet ist.

10. Heckenschere nach Anspruch 9, wobei der Klingenträger ein Durchgangsloch (145) aufweist,
wobei ein Lochabstand des Durchgangslochs in einer radialen Richtung der Klingenanordnung als ein erster Durchmesser definiert ist; die erste Klinge umfasst eine erste Öffnung (114), und
die zweite Klinge weist eine zweite Öffnung (124) auf,
wobei ein Öffnungsabstand der ersten Öffnung in der radialen Richtung der Klingenanordnung eine erste Länge ist, ein Öffnungsabstand der zweiten Öffnung in der radialen Richtung der Klingenanordnung eine zweite Länge ist, und die erste Länge und die zweite Länge größer sind als der erste Durchmesser; und die Klingenanordnung umfasst ferner ein Befestigungselement, das durch die erste Öffnung, die zweite Öffnung und das Durchgangsloch verläuft.

## Revendications

1. Taille-haie (10) comprenant :
un boîtier (200) formé avec un espace de logement (210) ;
un ensemble de lames (100) comprenant une première lame (110) et une deuxième lame (120), dans lequel la première lame et la deuxième lame effectuent un mouvement alternatif le long d'une direction d'une première ligne droite (101) ; et l'ensemble de lames comprend en outre un support de lames (140) destiné à supporter la première lame et la deuxième lame et s'étendant le long de la direction de la première ligne droite ;
un mécanisme de transmission (300) destiné à amener l'ensemble de lames en mouvement ; et
un moteur (400) couplé au boîtier et utilisé pour entraîner le mécanisme de transmission en mouvement ;
**caractérisé en ce que** le support de lames (140) présente une densité supérieure ou égale à 1 g/cm³ et inférieure ou égale à 2,2 g/cm³.

2. Taille-haie selon la revendication 1, dans lequel le support de lame présente une dureté supérieure ou égale à 7 HW et inférieure ou égale à 15 HW.

3. Taille-haie selon la revendication 1, dans lequel le support de lames est constitué d'au moins un matériau composite.

4. Taille-haie selon la revendication 3, dans lequel le support de lames est constitué d'un mélange de matériau à base de fibres de carbone et d'un matériau à base de fibres de verre.

5. Taille-haie selon la revendication 4, dans lequel un rapport de masse du matériau à base de fibres de carbone au matériau à base de fibres de verre dans le support de lames est supérieur ou égal à 0,5 et inférieur ou égal à 2.

6. Taille-haie selon la revendication 5, dans lequel le rapport du matériau à base de fibres de carbone au matériau à base de fibres de verre dans le support de lames est de 1.

7. Taille-haie selon la revendication 1, dans lequel le support de lames du taille-haie présente une épaisseur supérieure ou égale à 5 mm et inférieure ou égale à 10 mm.

8. Taille-haie selon la revendication 1, dans lequel un rapport d'une longueur à une épaisseur du support de lames est supérieur ou égal à 75 et inférieur ou égal à 170.

9. Taille-haie selon la revendication 1, dans lequel l'ensemble de lames comprend en outre un espaceur (130) disposé entre la deuxième lame et le support de lames, et la première lame est disposée sur un côté inférieur de la deuxième lame.

10. Taille-haie selon la revendication 9, dans lequel le support de lames comprend un trou traversant (145), dans lequel une distance de trou du trou traversant dans une direction radiale de l'ensemble de lames est définie comme un premier diamètre ; la première lame comprend une première ouverture (114) et la deuxième lame comprend une deuxième ouverture (124),
dans lequel une distance d'ouverture de la première ouverture dans la direction radiale de l'ensemble de lames est une première longueur, une distance d'ouverture de la deuxième ouverture dans la direction radiale de l'ensemble de lames est une deuxième longueur, et la première longueur et la deuxième longueur sont supérieures au premier diamètre ; et l'ensemble de lames comprend en outre un moyen de fixation traversant la première ouverture, la deuxième ouverture, et le trou traversant.
